Europäisches Patentamt

European Patent Office

Office européen des brevets

(11) Publication number: 0 282 009
A2

# EUROPEAN PATENT APPLICATION

(21) Application number: 88103630.5

(51) Int. Cl.4: G01N 21/77

(22) Date of filing: 08.03.88

(30) Priority: 10.03.87 FI 871042

(43) Date of publication of application:
14.09.88 Bulletin 88/37

(84) Designated Contracting States:
CH DE FR GB IT LI NL SE

(71) Applicant: SOUNDEK OY
Otaniemen Teknologiakylä Tekniikantie 17
SF-02150 Espoo(FI)

(72) Inventor: Luukkala, Mauri
Haukilahdenranta 23 B 5
SF-02170 Espoo(FI)
Inventor: Matilainen, Aarre
Harjantekijäntie 3 C 2
SF-00640 Helsinki(FI)
Inventor: Viirto, Jarmo
Nummenseikä 9 H 24
SF-03100 Nummela(FI)

(74) Representative: Struif, Bernward, Dipl.-Chem.
Dr. et al
Patentanwaltsbüro Tiedtke, Bühling, Kinne
Grupe, Pellmann, Grams, Struif,Winter, Roth
Bavariaring 4
D-8000 München 2(DE)

(54) Fibre-optic detector for oils and solvents.

(57) In the present invention is described a liquid detector (10) employing fibre optics, by which can be detected the presence e.g. of oils and various solvents. The means is internally safe because the optic fibre (13) is an insulator and it may therefore be used to monitor liquids involving fire or explosion hazard. The means may be used to detect leakage when storing oils and solvents because it reacts most rapidly with these liquids. The detector (10) makes use of the capillarity of the sensing pick-up (14), the optical reflection coefficient of the pick-up material changing as it comes into contact with the liquid (16) to be detected.

FIG. 1

## Fibre-optic detector for oils and solvents

The invention concerns a fibre-optic detector for oils, solvents and equivalent liquid hydrocarbons, consisting of a fibre-optic light transmitter and light receiver and an optic fibre connected to them, a of a pick-up for sensing said liquids, located at the latter's free end.

It is possible with this type of apparatus employing fibre optics to detect swiftly and safely various kinds of liquids, especially various oils, such as light or heavy fuel oil, or equally other liquids presenting fire or explosion hazard, such as solvents. The means is particularly well usable in providing alarm of liquid leakage, because the means has a fairly high speed of detection.

In chemical industry, above all, dangerous and inflammable liquids often have to be stored in big cisterns both outdoors and indoors. Because of leakage, such a cistern constitutes a considerable risk to safety of humans as well as nature. Electronic detection particularly of liquids posing risk of fire or explosion is difficult because an electronic, galvanic measuring and alarm pick-up involves a risk of short-circuit and sparking. The leakage detector should be "internally safe"; this is achievable by using fibre optics: the fibre is an insulator, and completely passive even otherwise, and it cannot suffer short-circuit or cause sparking. Detection of oils and oil leakage is also rather difficult for the reason that oil is rather passive and, for instance, its dielectric constant is little different from that e.g. of sandy soil. Oil leakage is not observed in general until it is too late. Detection of small leaks may be particularly difficult because it may be hard to notice the leak by the liquid level e.g. in a large cistern. If moreover fast-evaporating liquids are concerned, to which kind many solvents belong, the substance may evaporate before the leakage is noticed. The means detecting leakage should therefore be quite sensitive and fast. The means disclosed in this invention will, for instance, detect acetone within about 1 second and fuel oil in less than half a minute. These speeds are adequate.

U.S. Patent No. 4,386,269 discloses a detector in which for the fibre is provided a special sheath layer of which the refractive index differs from that of the fibre itself so that the light is reflected, or refracted, into the fibre. When such a sheath layer is made oil-absorbing, its refractive index changes so that light will "leak out" and the light propagation properties within the fibre change so that it is totally absorbed. It is essential that the oil-absorbing layer is in contact with the core of the fibre in order that the condition for total reflection might be altered. The relations between the refractive index of the fibre and of its sheath change in a given manner so that the condition of total reflection is no longer fulfilled for the core and the sheath in immediate contact therewith.

In the detector of U.S. Patent No. 4,159,420 a fibre is used which has a refractive index higher than that of the surrounding matter. The fibre is surrounded with a material of which the refractive index changes when it comes into contact e.g. with oil. This chang of refractive index has the effect that the condition of total reflection in the core of the fibre is no longer fulfilled and the light "leaks out", thus causing considerable extra attenuation in the propagation of light. On the end of the fibre a mirror may be installed, the reflection from it returning the light to its starting point, whereby the light when being reflected by the walls of the fibre can observe the change of refractive index and can be attenuated. It is essential that the relations of the refractive indices of the fibre core and of its sheath change in a given way so that the condition of total reflection is no longer fulfilled for the core and the sheath in immediate contact therewith.

In the EP application print No. 126,600, optic fibres are employed to observe the presence of certain chemicals by using on the end of the pick-up a pick-up construction of such kind wherein the end of the fibre bundle is tightly surrounded by a porous membrane inside which powdery, cross-linked polystyrene has been provided. To such polystyrene powder a reagent has been chemically bound which changes colour on contact with the liquid to be monitored. The porous membrane consists of Teflon, which repels water. The chemical to be monitored passes through the Teflon film and reacts with said substance provided in the polystyrene powder, the spectroscopic characteristics of the substance changing on contact with the liquid.

In the reference WO-86/05589 a material is used to which has been permanently attached an indicator substance of which the spectral characteristics change when it comes into contact with the substance to be monitored.

GB Patent No. 21 03 286 discloses a detector in which the surface of the fibre core has been covered with an indicator substance having a porous surface. The end of the optic fibre is provided with a mirror which reflects the light back to the measuring electronics.

It may be noted regarding the prevailing state of art that it is previously known that optic fibres may be used to observe sensor elements installed on the end of the fibre. Light is sent from an optic fibre transmitter by the fibre to the object to be examined, and the light is brought back to a detector along the same, or another, fibre. The sensor element on the end of the fibre is then affected in one way or another by the phenomenon that is being examined.

A leakage detector is known in the art which detects the presence of oils based on the circumstance that the sheath material of the optic fibre consists of a material which swells as it comes into contact with oil. The oil then gains access to the space between sheath and fibre, thus causing extra attenuation in the propagation of light.

The object of the invention is to achieve an improvement of presently known fibre-optic detector designs. The detailed object of the invention is to provide a detector which is "internally safe".

Still one object of the invention is to provide a detector which is highly sensitive and fast.

The aims of the invention are attained with a detector which is mainly characterized in that the sensor pick-up is a pick-up consisting either of such material which, on coming into contact with the liquid to be monitored, absorbs the liquid by capillary action or of a material which dissolves in the liquid to be monitored, whereby the optical coefficient of reflection of the pick-up material changes so that it can be observed by means of a fibre-optic detector in a way known in itself in electro-optics.

The other important characteristic features of the detector of the invention are stated in claims 2-4.

The invention is described in detail referring to certain advantageous embodiments of the invention, presented in the figures of the attached drawing, to which however the invention is not meant to be exclusively confined.

Fig. 1 presents schematically an advantageous embodiment of the fibre-optic detector of the invention.

Fig. 2 presents an advantageous embodiment of the sensing pick-up employed in Fig. 1, on a larger scale.

Fig. 3 presents another advantageous embodiment of the sensing pick-up employed in Fig. 1, on a larger scale.

Fig. 4 presents schematically the absorption of a liquid droplet and its travel from the sensor pick-up's stained end with the aid of capillary force to the other end of the porous pick-up material, the stain following along.

The inventive feature in the present means is a drastic change of the optical coefficient of reflection of the pick-up mounted on the end of an optic fibre when it comes into contact with oil or with a solvent, so that the change of optical contrast can be observed by fibre-optic means. Of course, the change of optical reflection coefficient can be observed e.g. with a combination of LED lamp and photodiode, but any such arrangement is not internally safe in view of explosive liquids. In contrast to a passive fibre pick-up, a device of such kind could also hardly be buried in the ground.

From fibre optics, fibre-optic transmitters and receivers are known by which objects can be observed by mediation of fibres. Although such arrangements are previously known in themselves, they constitute an important part of the present invention. Furthermore, fibre-optic directional switches are employed, by which the light coming from the pick-up can be separated from the transmission light travelling along the same fibre.

There is a plurality of fibrous substances which with the aid of capillary force take up liquids by absorption and change colour. As an example, let us consider a lump of sugar dipped in a coffee cup. The sugar lump rapidly absorbs coffee and turns dark. The dark discolouration is observable by fibre optics. If, further, the sugar lump is held long in the coffee, it will dissolve away totally, and this too can be observed with fibre optics. This fact is likewise part of the invention. However, when the intention is to observe oils or other liquid hydrocarbons e.g. among sand, the pick-up has to be water-repellent but hydrocarbon-absorbing. In this case the pick-up material should be hydrophobic, preferably white in colour, and the pores in the substance should be of suitable size. It is possible from polystyrene to sinter porous bodies which have exactly desired properties. If a porous polyethylene capsule is submerged in water-soluble ink, it will remain white, whereas it becomes immediately dark on immersion in alcohol-soluble ink. Sintered polyethylene is mechanically durable even otherwise.

There are still other porous materials, e.g. the material of felt pen tips, and porous Teflon film (Bore Tex), which possess the desired properties. The desired hydrophobic quality and capillarity depend basically on the surface tension properties of the material on the interface between two substances.

The Applicant has carried out tests with sintered polyethylene powder capsules e.g. in such manner that the pick-up has been buried in sandy soil one year, without any changes in its operation. Optic fibres do tolerate burying in the ground provided that certain protective steps are taken. It is obvious that the pick-up head proper has to be mechanically protected so that it is not subjected to any stress. A thin oil layer floating on water can also be detected with the aid of the pick-up.

Another alternative for observing liquids is to use a material which is rapidly solved therein. In its simplest form, a pick-up of this type is a white click of paint applied on the end of the fibre, which will rapidly dissolve e.g. in acetone when it comes into contact therewith. By effect of the dissolving the reflection is drastically reduced and alarm is obtained.

The pick-ups just described are naturally good for one-time use only, and in practical implementations they are made to be exchangeable with ease. This is no drawback, seeing that leakage is usually also a singular event.

It may finally be noted that the measured "on/off" ratios have been better than 20 dB, which makes for an adequate margin regarding any extra attenuations that may occur in the fibres, for instance owing to flexure. Most often, however, the fibre is protected e.g. with a protective tube against external effects.

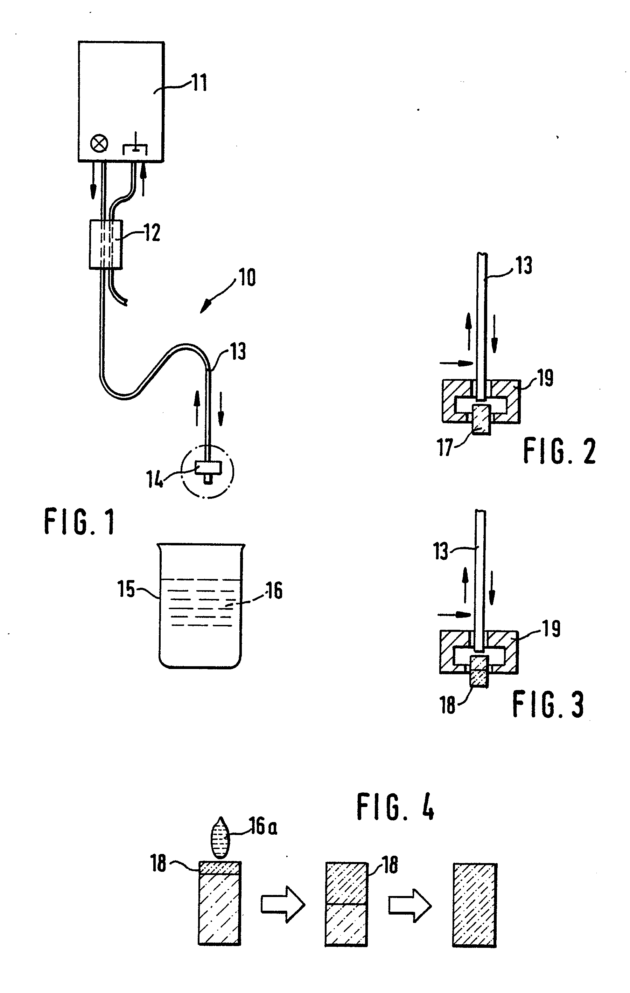

In Fig. 1, the fibre optic transmitter/receiver 11 sends light into the fibre 13 at a suitable wavelength, toward the pick-up 14 on the free end of the fibre, so that the light returning from the pick-up end enters the receiver, mediated by the optical directional switch 12. It may be noted in this connection that the detector 10 of the invention operates equally well with two separate fibres, one of them the transmitting fibre and the other the receiving fibre, but this does not substantially alter the invention. The liquid 16 in the vessel 15 represents the liquid which should be detected. Of course, the liquid 16 may be, for instance, liquid that has been spilled into the ground and comes into contact with the pick-up 14.

Figs 2 and 3 present in closer detail the design of the pick-up head proper. On the end of the fibre 13 has with the aid of a holder or sleeve 19 been mounted the pick-up 17 proper. The fibre 13 is used to monitor the optical reflecting layer on the top surface of the pick-up material. The pick-up material is a porous material so that, when it comes into contact with the liquid 16, the liquid 16 is drawn or absorbed by the aid of the capillary phenomenon into the pick-up material, whereby the optical reflection coefficient of the pick-up material's top surface changes. It is thus understood that the capillary force occurring in the porous material moves part of the liquid 16 to a location close to the end of the fibre 13. Since the end of the fibre 13 can be isolated from the liquid 16 itself, it is not necessarily soiled.

If the liquid 16 to be monitored causes only a minor change in the coefficient of reflection, the change of contrast can be boosted by staining the pick-up material with a suitable staining agent 18, in which case the staining agent 18 will travel to the end of the fibre 13 along with the liquid 16, as can be seen in Fig. 3. This may be a good procedure in detecting colourless solvents, such as acetone, ethanol or equivalent.

In Fig. 4 is more closely illustrated the absorption of a liquid droplet 16a and its travel from the stained end of the pick-up 17, by capillary effect, to the other end of the porous pick-up material, the staining agent 18 following along. The staining agent 18 has to be soluble in the respective liquid 16. The staining agent may be ink or equivalent.

When the fibre-optic transmitter/receiver unit 11 observes a change in the optical reflection coefficient, an alarm signal indicating the event is obtained from the electronics in a way known in itself in electronics. It is obvious from what has been said above that the pick-up material is decisive for operation.

## Claims

1. A fibre-optic detector (10) for oils, solvents and equivalent liquid hydrocarbons, and other liquids, consisting of a fibre-optic light transmitter and light receiver (11) and of an optic fibre (13) attached to them, on the free end of which is located a pick-up (14) sensing said liquids, characterized in that the sensor pick-up (14) is a pick-up (17) made of such material which when coming into contact with the liquid to be detected either absorbs by the aid of capillarity the liquid into itself or is a pick-up (17) of such material which is solved in the liquid to be detected, whereby the optical reflection coefficient of the pick-up material changes so that it can be observed with the fibre-optic detector (10) in a way known in itself in electro-optics.

2. Fibre-optic detector according to claim 1, characterized in that the pick-up (17) consists of sintered porous polyethylene or other equivalent porous material which repels water or other undesired liquids but absorbs liquids meant to be detected.

3. Fibre-optic detector according to claim 1, characterized in that the pick-up (17) consists of material which is solved only in a given, pre-determined substance.

4. Fibre-optic detector according to claim 1 or 2, characterized in that the sensing pick-up (14) is at one end stained with a suitable staining agent (18), whereby the staining agent travels along with the liquid being absorbed, to the unstained end of the sensing pick-up (14).

FIG. 1

FIG. 2

FIG. 3

FIG. 4